Europäisches Patentamt

European Patent Office

Office européen des brevets

(11) Publication number: **0 246 558 B1**

## EUROPEAN PATENT SPECIFICATION

(45) Date of publication of patent specification: **21.04.93**   (51) Int. Cl.5: **C08L 25/04**, C08L 51/06

(21) Application number: **87106962.1**

(22) Date of filing: **14.05.87**

The file contains technical information submitted after the application was filed and not included in this specification

(54) **High-tenacity, high-flexibility polymeric blend.**

(30) Priority: **14.05.86 IT 2043386**

(43) Date of publication of application:
**25.11.87 Bulletin 87/48**

(45) Publication of the grant of the patent:
**21.04.93 Bulletin 93/16**

(84) Designated Contracting States:
**AT BE CH DE ES FR GB LI NL SE**

(56) References cited:
**EP-A- 0 195 829**

**PATENT ABSTRACTS OF JAPAN, vol. 6, no. 231 (C-135)[1109], 17th November 1982; JP-A-57 135 845 (SUMITO KAGAKU KOGYO K.K.) 21-08-1982**

(73) Proprietor: **ECP ENICHEM POLIMERI S.r.l.
16, Piazza della Repubblica
I-20124 Milano(IT)**

(72) Inventor: **Biglione, Gianfranco
63, viale Risorgimento
I-46100 Mantova(IT)**
Inventor: **Fasulo, Gian Claudio
11, via Puccini I-46010
San Silvestro di Curtatone Mantova(IT)**

(74) Representative: **Zumstein, Fritz, Dr. et al
Dr. F. Zumstein Dr. E. Assmann Dipl.-Ing. F.
Klingseisen Bräuhausstrasse 4
W-8000 München 2 (DE)**

Rank Xerox (UK) Business Services
(3.10/3.5x/3.0.1)

EP 0 246 558 B1

## Description

EP-A-195 829 (to be considered under article 54(3) EPC) discloses a polymer blend composition comprising

(a) at least 20 % by weight of an olefin polymer;

(b) at least 5 % by weight of a monovinylidene aromatic polymer, and

(c) a compatibilizing amount of a monovinylidene aromatic polymer-grafted alpha-olefin copolymer.

The patent abstracts of Japan, 1982, vol.6, No. 231 are directed to the improvement of the impact resistance of a poly-alpha-olefin by the addition of a copolymer (b) prepared by a graft polymerization of an ethylene-alpha-olefin-polyene ternary copolymer with a polymerizable unsaturated monomer containing at least 25% by weight of an alkenyl aromatic monomer (styrene), wherein the weight ratio ethylene-alphaolefin-polyene copolymer/polymerizable unsaturated monomer is 1/3 to 20/1. The amount of the copolymer (b) is from 1 to 100 parts by weight to 100 by weight of the polyolefin which corresponds to a range from 99 to 50 % by weight of the polyolefin with respect to the blend copolymer (b) + polyolefin.

The object of the present invention is a thermoplastic polymeric blend endowed with high tenacity and high flexibility characteristics.

More particularly, the present invention relates to a thermoplastic blend endowed with high tenacity and high flexibility, particularly suitable for the injection moulding and thermoforming of compact or foamed pieces for uses in the packing, household electrical appliances, motor cars, telectronic, etc., fields.

The polymeric blend of the present invention comprises a styrene polymer or copolymer reinforced with ethylenepropylene-diene rubber (EPDM) and polyethylene, characterized in that the amount of polyethylene is higher than 15 % and up to 38 % by weight with respect to the blend, the amount of the ethylene-propylene-diene (EPDM) in the mixture is from 5 to 50 % by weight and when the polyethylene/EPDM weight ratio is higher than 1,5, the weight ratio of the rigid phase to the EPDM rubber, in the polymeric blend, does not exceed 3.5.

The term "polyethylene" comprises an ethylene polymer having a density of from 0.90 to 0.97, such as, for example, the polymers known as low-density polyethylene (LDPE), linear low-density polyethylene (LLDPE) and high-density polyethylene (HDPE).

The term "styrene polymer or copolymer reinforced with ethylene-propylene-diene (EPDM) rubber", comprises a polymeric material consisting of:

a) a rigid matrix constituted by polystyrene, or by a styrene copolymer containing up to 40% by weight of an acrylic monomer, and

b) an elastomeric phase dispersed in the rigid matrix and constituted by EPDM rubber either totally or partly grafted with chains of polystyrene or of styrene-acrylic monomer copolymer of the rigid matrix.

The term "acrylic monomer", comprises above all, and preferably, acrylonitrile; however, other ethylenically-unsaturated acrylic monomers, such as methacrylonitrile, can be used with similar advantages.

The styrene polymer or copolymer reinforced with EPDM rubber can be used as such, or blended with polystyrene, or with a styrene copolymer, such as styrene-acrylonitrile (SAN) copolymer, in an amount of up to 50% by weight.

The styrene polymer or copolymer reinforced with EPDM rubber can be obtained by either dissolving or dispersing the EPDM rubber into the styrenic monomer or monomers mixture, optionally in the presence of a solvent, and polymerizing the resulting dispersion by mass, suspension or continuous-mass polymerization as disclosed, e.g., in IT-B-792,279 and in GB-B-2,059,427.

In the polymeric blend of the present invention, the polyethylene may range from an amount higher than 15% by weight up to 38% by weight and correspondingly the styrene polymer or copolymer reinforced with EPDM rubber may range from 62% up to an amount lower than 85% by weight. However when the polyethylene/EPDM weight ratio is higher than 1.5, the weight ratio of the rigid phase to the EPDM rubber, or elastomeric phase, in the polymeric blend, does not exceed 3.5.

The preparation of the polymeric blend according to the invention can be carried out by blending the starting polymeric products, in pellet form, in a mill; the blend is then processed in the plastic state, at high temperature, in a screw extruder-pelletizer.

The polymeric blends of the invention are endowed with good mechanical properties, have a high homogeneousness degree, are not subjected to delamination and are suitable for injection-moulding and thermoforming according to conventional methods.

The polymeric blends of the present invention may also contain different agents, such as, e.g., stabilizers, flame retarding agents, antistatic agents, and so forth, for the manufacturing of particular articles endowed with UV-resistance, self-extinguishing properties, low surface attraction for dusts, etc.

Foaming agents may be furthermore added to the blends of the present invention.

As such foaming agents, there can be used:

a) the chemical foaming agents, such as, e.g., azodicarbonamide, which are added to the polymeric blend and are decomposed inside the apparatus (either injection-press or extruder) for obtaining lighter objects or semifinished articles having a density up to three times lower than of the starting product;

b) the physical foaming agents, such as, e.g., the short-chain aliphatic hydrocarbons (propane, butane, pentane, etc.), or halocarbons, such as freon, by which the pellets of the polymeric blend are impregnated and then foamed and sintered, to the purpose of obtaining articles having density values up to 30 times lower than of the starting product.

Examples 1-4 (Examples 3 and 4 being comparative examples)

The components of the blend as reported in the following table are blended on a rotary-arms mill, at 100 rpm, and the resulting blend is extruded on a twin-screw WERNER & PFLEIDERER ZSK53 extruder, at a temperature of the molten polymer of 240°C.

The extruded rods, after water-cooling, are cut into pellets. The pellets are fed to an injection press for specimens moulding.

The properties as determined on the specimens are reported in the following table:

T A B L E

| COMPOSITIONS | | | EXAMPLES | | |
|---|---|---|---|---|---|
| | | 1 | 2 | 3 | 4 |
| Weight units of Polyethylene with density = 0.918 (Escorene LL 1201®) M.I. = 1(*) | | | | 50 | 38 |
| Weight units of Polyethylene with density = 0.926 (Escorene LL 1001®) M.I. = 0,8 (*) | | 20 | 30 | | |
| Weight units of Styrene/acrylonitrile 75/25 copolymer reinforced with 25% of EDPM | | 80 | 70 | 50 | 38 |
| Weight units of Styrene/acrylonitrile (SAN) 75/25 copolymer | | | | | 24 |
| EPDM content (weight units) | | 20 | 17.5 | 12.5 | 9.5 |
| Content of styrene/acrylonitrile (SAN) copolymer (weight units) | | 60 | 52.5 | 37.5 | 52.5 |
| Polyethylene/EPDM ratio by weight | | 1 | 1.7 | 4 | 4 |
| SAN/EPDM ratio by weight | | 3 | 3 | 3 | 5.5 |

| PROPERTIES | METHOD | UNITS | 1 | 2 | 3 | 4 |
|---|---|---|---|---|---|---|
| Compatibility | | | B[1] | B[1] | B[1] | delaminates |
| Izod relisience at 23°C on 3.2mm thick specimens | ASTM D256 | J/m | 310 | 350 | 620 | 110 |
| Tensile strength -yield strength | ASTM D638 | N/mm$^2$ | 14.5 | 13.2 | 10.5 | 18 |
| -ultimate tensile strength | | N/mm$^2$ | 22 | 19.3 | 16.5 | 20 |
| -elongation at break | | % | 37 | 55 | 90 | 20 |
| elastic modulus | | N/mm$^2$ | 1050 | 850 | 500 | 950 |

(*) M.I. = Melt-Flow Index, as measured at 190°C and 2.13 kg., expressed as g/10 minutes;

(1) B = Good

## Claims

1. High-tenacity, high-flexibility polymeric blend comprising a styrene polymer or copolymer reinforced with ethylene-propylene-diene (EPDM) rubber and polyethylene, characterized in that the amount of polyethylene is higher than 15 % and up to 38 % by weight with respect to the blend, the amount of the ethylene-propylene-diene (EPDM) in the mixture is from 5 to 50 % by weight and when the polyethylene/EPDM weight ratio is higher than 1,5, the weight ratio of the rigid phase to the EPDM rubber, in the polymeric blend, does not exceed 3.5.

2. Polymeric blend according to claim 1, wherein polyethylene has a density of from 0.90 to 0.97.

3. Polymeric blend according to any of preceding claims, wherein the styrene polymer or copolymer reinforced with EPDM rubber comprises a polymeric material constituted by:
   a) a rigid matrix constituted by polystyrene, or by a styrene copolymer containing up to 40% by weight of an acrylic monomer, and:
   b) an elastomeric phase dispersed in the rigid matrix and constituted by EPDM rubber either totally or partly grafted with chains of polystyrene or of styrene-acrylic monomer copolymer of the rigid matrix.

4. Polymeric blend according to any of preceding claims, wherein the styrene polymer or copolymer reinforced with EPDM rubber is blended with polystyrene, or with a styrene copolymer, such as styrene-acrylonitrile copolymer, in an amount of up to 50% by weight.

5. Polymeric blend according to claim 4 , wherein the styrene copolymer is constituted by styrene-acrylonitrile.

6. Polymeric blend according to any of preceding claims, containing a foaming agent.

7. Process for the preparation of a polymeric blend according to any of claims 1 to 6 characterized by the steps of blending the starting polymeric products in pellet form in a mill and thereafter processing the blend in the plastic state at high temperature in a screw extruder-pelletizer.

## Patentansprüche

1. Polymermischung mit hoher Festigkeit und hoher Flexibilität, umfassend ein Styrolpolymeres oder -copolymeres, verstärkt mit Ethylen-Propylen-Dien-(EPDM)-Kautschuk und Polyethylen, dadurch gekennzeichnet, daß die Menge des Polyethylens mehr als 15 und bis zu 38 Gew.-%, bezogen auf die Mischung, beträgt, die Menge des Ethylen-Propylen-Diens (EPDM) in der Mischung 5 bis 50 Gew.-% beträgt, und wenn das Polyethylen/EPDM-Gewichtsverhältnis höher als 1,5 ist, das Gewichtsverhältnis der starren Phase zu dem EPDM-Kautschuk in der Polymermischung 3,5 nicht überschreitet.

2. Polymermischung gemäß Anspruch 1, worin das Polyethylen eine Dichte von 0,90 bis 0,97 besitzt.

3. Polymermischung gemäß einem der vorhergehenden Ansprüche, worin das Styrolpolymere oder -copolymere, welches mit EPDM-Kautschuk verstärkt ist, ein Polymermaterial umfaßt, welches gebildet wird von
   a) einer starren Matrix, gebildet aus Polystyrol oder aus einem Styrolcopolymeren, enthaltend bis zu 40 Gew.-% eines Acrylmonomeren, und
   b) einer elastomeren Phase, die in der starren Matrix dispergiert ist und aus EPDM-Kautschuk gebildet wird, der entweder vollständig oder teilweise mit Ketten von Polystyrol oder von Styrol-Acrylmonomer-Copolymer der starren Matrix gepfropft ist.

4. Polymermischung gemäß einem der vorhergehenden Ansprüche, worin das mit EPDM-Kautschuk verstärkte Styrolpolymer oder -copolymer mit Polystyrol oder mit einem Styrolcopolymer, wie Styrol-Acrylnitril-Copolymer, in einer Menge von bis zu 50 Gew.-% gemischt ist.

5. Polymermischung gemäß Anspruch 4, worin das Styrolcopolymer aus Styrol-Acrylnitril besteht.

**6.** Polymermischung gemäß einem der vorhergehenden Ansprüche, die ein Schaummittel enthält.

**7.** Verfahren zur Herstellung einer Polymermischung gemäß einem der Ansprüche 1 bis 6, gekennzeichnet durch die Stufen des Mischens der polymeren Ausgangsprodukte in Pelletform in einer Mühle und hieran anschließend die Verarbeitung der Mischung in plastischem Zustand bei hoher Temperatur in einer Schneckenextruder-Körnungsmaschine.

**Revendications**

**1.** Mélange polymère de ténacité élevée et de flexibilité élevée comprenant un polymère ou copolymère styrène renforcé avec du caoutchouc éthylène-propylène-diène (EPDM) et du polyéthylène, caractérisé en ce que la quantité de polyéthylène est supérieure à 15% et jusqu'à 38% en poids, par rapport au mélange, la quantité du copolymère éthylènepropylène-diène (EPDM) dans le mélange est comprise entre 5 et 50% en poids et lorsque le rapport pondéral polyéthylène/EPDM est supérieur à 1,5, le rapport pondéral phase rigide/caoutchouc EPDM, dans le mélange polymère, n'excède pas 3,5.

**2.** Mélange polymère selon la revendication 1, dans lequel le polyéthylène a une densité de 0,90 à 0,97.

**3.** Mélange polymère selon l'une quelconque des revendications précédentes, dans lequel le polymère ou le copolymère de styrène renforcé avec du caoutchouc EPDM comprend un matériau polymère constitué par:
(a) une matrice rigide constituée par du polystyrène, ou par un copolymère de styrène comprenant jusqu'à 40% en poids d'un monomère acrylique, et
(b) une phase élastomère dispersée dans la matrice rigide et constituée par un caoutchouc EPDM soit totalement soit partiellement greffé avec des chaînes de polystyrène ou d'un copolymère styrènemonomère acrylique de la matrice rigide.

**4.** Mélange polymère selon l'une quelconque des revendications précédentes, dans lequel ou polymère ou le copolymère de styrène renforcé avec un caoutchouc EPDM est mélangé avec du polystyrène, ou avec un copolymère de styrène, tel que le copolymère styrène/acrylonitrile, en une quantité jusqu'à 50% en poids.

**5.** Mélange polymère selon la revendication 4, dans lequel le copolymère de styrène est constitué par du styrène/acrylonitrile.

**6.** Mélange polymère selon l'une quelconque des revendications précédentes, contenant un agent de moussage.

**7.** Procédé pour la préparation d'un mélange polymère selon l'une quelconque des revendications 1 à 6, caractérisé par les étapes de mélange des produits polymères de départ sous forme de granulés dans un broyeur et ensuite traitement du mélange à l'état plastique à température élevée dans un granuleur-extrudeur à vis.